# EUROPEAN PATENT APPLICATION

(11) **EP 2 637 397 A1**
(43) Date of publication of application: **11.09.2013**
(21) Application number: 12158711.7
(22) Date of filing: 09.03.2012
(51) Int. Cl.: H04N 5/232, H04N 5/235

(54) **Methods and devices for capturing images**

(71) Applicant: BlackBerry Limited, Waterloo ON N2L 3W8 (CA)
(72) Inventor: Ellis, Brent Andrew, Waterloo, Ontario N2L 3W8 (CA); Daigle, Joshua Lucien, Waterloo, Ontario N2L 3W8 (CA)
(74) Representative: Patel, Binesh

(57) **Abstract**

Methods and electronic devices for capturing images are described. In one aspect, the present disclosure describes a processor-implemented method for capturing an image at an electronic device. The method includes: receiving at the processor a signal instructing the electronic device to capture an image; and in response to receiving the signal instructing the electronic device to capture the image: i) capturing a non-flash image; ii) triggering a flash; and iii) capturing a flash image.

## Description

### TECHNICAL FIELD

The present disclosure relates to electronic devices having cameras and, more particularly, to methods and electronic devices for capturing images on such electronic devices.

### BACKGROUND

Electronic devices, such as smartphones and tablet computers, are sometimes equipped with cameras. Cameras may, for example, be used to allow a user to capture a video or a still photograph.

Cameras often allow a user to adjust one or more camera setting when taking photographs. For example, users may be permitted to turn a flash on or off, enable a red-eye reduction mode, focus the camera, or adjust another setting. Users often adjust such camera settings in order to obtain a high-quality photograph of their subject taking into account, for example, the distance of the subject to the camera and the ambient light in the vicinity of the subject.

Photographers sometimes have difficultly selecting ideal camera settings to use when capturing photographs. Camera setting selection may, for example, be overwhelming for amateur photographers.

### BRIEF DESCRIPTION OF THE DRAWINGS

Reference will now be made, by way of example, to the accompanying drawings which show example embodiments of the present application and in which:

FIG. 1 is a front view of an example electronic device in accordance with example embodiments of the present disclosure;

FIG. 2 is a rear view of the example electronic device of FIG. 1 in accordance with example embodiments of the present disclosure;

FIG. 3 is a block diagram illustrating components of the example electronic device of FIG. 1 in accordance with example embodiments of the present disclosure;

FIG. 4 is a flowchart of an example method for capturing images in accordance with example embodiments of the present disclosure;

FIG. 5 is a flowchart of an example method for designating an image as a primary image in accordance with example embodiments of the present disclosure;

FIG. 6 is a flowchart of an example method for removing a lower quality image in accordance with example embodiments of the present disclosure;

FIG. 7 is an example image display in accordance with example embodiments of the present disclosure; and

FIG. 8 is a flowchart of an example method for selecting an image for display in accordance with example embodiments of the present disclosure.

Like reference numerals are used in the drawings to denote like elements and features.

### DETAILED DESCRIPTION OF EXAMPLE EMBODIMENTS

In one aspect, the present disclosure describes a processor-implemented method for capturing an image at an electronic device. The method includes: receiving at the processor a signal instructing the electronic device to capture an image; and in response to receiving the signal instructing the electronic device to capture the image: i) capturing a non-flash image; ii) triggering a flash; and iii) capturing a flash image.

In another aspect, the present disclosure describes an electronic device. The electronic device includes a camera and a flash. The electronic device also includes a memory and a processor coupled with the camera, flash and memory. The processor is configured to: receive at the processor a signal instructing the electronic device to capture an image; and in response to receiving the signal instructing the electronic device to capture the image: capture a non-flash image; trigger a flash; and capture a flash image.

In yet another aspect, the present application describes a computer readable storage medium including computer-executable instructions which, when executed, cause a processor to: receive a signal at the processor instructing the electronic device to capture an image; and in response to receiving the signal instructing the electronic device to capture the image: capture a non-flash image; trigger a flash; and capture a flash image.

Other example embodiments of the present disclosure will be apparent to those of ordinary skill in the art from a review of the following detailed descriptions in conjunction with the drawings.

### Example Electronic Devices

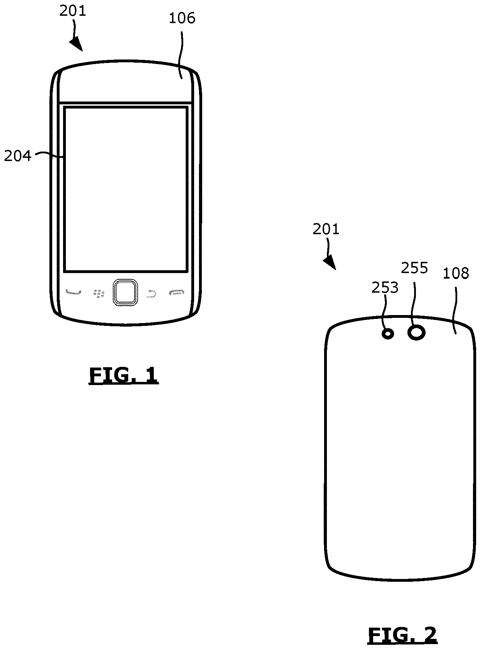

Referring first to FIG. 1, a front view of an example electronic device 201 is illustrated. In the example embodiment illustrated, the electronic device 201 is a smartphone. A smartphone is a mobile phone which offers more advanced computing capability than a basic non-smart cellular phone. For example, a smartphone may have the ability to run third party applications which are stored on the smartphone.

The electronic device 201 may take other forms in other embodiments. For example, in some example embodiments, the electronic device 201 may be a tablet computer. A tablet computer (which may also be referred to as a tablet) is an electronic device which is generally larger than a mobile phone (such as a smartphone) or personal digital assistant. Many mobile phones or personal digital assistants are designed to be pocket sized. That is, mobile phones or personal digital assistants are generally small enough to be carried by a person easily, often in a shirt or pant pocket, while tablet computers are larger and may not fit within pant pockets. For example, many tablet computers have a height which is seven inches (7") or more. In some example embodiments, the tablet computer may be a slate computer. A slate computer is a tablet computer which does not include a dedicated keyboard. A slate computer may allow for text input through the use of a virtual keyboard or an external keyboard which connects to the slate computer via a wired or wireless connection.

In other embodiments, the electronic device 201 may be a device of another type. For example, in various example embodiments the electronic device 201 may be: a multiple-mode communication device configured for both data and voice communication, a mobile telephone such as a smartphone, a wearable computer such as a watch, a tablet computer such as a slate computer, a personal digital assistant (PDA), a television, a digital camera, or a computer system. The electronic device 201 may be of a form apart from those specifically listed above.

FIG. 1 illustrates a front view of the electronic device 201. The front view of the electronic device 201 illustrates a front face 106 of the electronic device 201. The front face 106 of the electronic device 201 is a side of the electronic device 201 which includes a main display 204 of the electronic device 201. The front face 106 of the electronic device 201 is a side of the electronic device 201 which is configured to be viewed by a user.

FIG. 2 illustrates a rear view of the electronic device 201. The rear view of the electronic device illustrates a rear face 108 of the electronic device 201. The rear face 108 is a side of the electronic device 201 which does not include a main display 204 of the electronic device 201. In the embodiment illustrated, the rear face 108 is a side of the electronic device 201 which is opposite the front face 106 (FIG. 1) of the electronic device 201. That is, the rear face 108 may be substantially parallel to the front face 106 of the electronic device.

The electronic device 201 includes one or more cameras 253. The cameras 253 are configured to generate camera data, such as images in the form of still photographs and/or motion video. The camera data may be captured in the form of an electronic signal which is produced by an image sensor associated with the camera 253. More particularly, the image sensor (not shown) is configured to produce an electronic signal in dependence on received light. That is, the image sensor converts an optical image into an electronic signal, which may be output from the image sensor by way of one or more electrical connectors associated with the image sensor. The electronic signal represents electronic image data (which may also be referred to as camera data).

In the embodiment illustrated, the electronic device 201 includes a rear facing camera 253. A rear facing camera is a camera 253 which is located to obtain images of a subject near a rear face 108 of the electronic device 201. That is, the rear facing camera may be located on or near a rear face 108 of the electronic device 201. In at least some embodiments, the rear facing camera is mounted internally within a housing of the electronic device 201 beneath a region of the rear face 108 which transmits light. For example, the camera 253 may be mounted beneath a clear portion of the housing which allows light to be transmitted to the internally mounted camera 253.

In other embodiments (not illustrated), the electronic device 201 may include a front facing camera instead of or in addition to the rear facing camera. A front facing camera is a camera which is located to obtain images of a subject near the front face 106 (FIG. 1) of the electronic device 201. That is, the front facing camera may be generally located at or near a front face 106 of the electronic device 201. The front facing camera may be located anywhere on the front surface of the electronic device; for example, the front facing camera may be located above or below the display 204. In at least some example embodiments, the front facing camera may be provided in a central location relative to the display 204 to facilitate image acquisition of a face. In at least some embodiments, the front facing camera may be used, for example, to allow a user of the electronic device 201 to engage in a video-based chat with a user of another electronic device 201. In at least some embodiments, the front facing camera is mounted internally within a housing of the electronic device 201 beneath a region of the front face 106 which transmits light. For example, the front facing camera may be mounted beneath a clear portion of the housing which allows light to be transmitted to the internally mounted camera.

In at least some embodiments (not shown), the electronic device 201 may include a front facing camera and also a rear facing camera. The rear facing camera may obtain images which are not within the field of view of the front facing camera. The fields of view of the front facing and rear facing cameras may generally be in opposing directions.

In at least some embodiments, the electronic device 201 may have additional camera hardware which may complement the camera 253. For example, in the embodiment illustrated, the electronic device 201 includes a flash 255. The flash 255 may, in at least some embodiments, be a light emitting diode (LED) flash. The flash 255 emits electromagnetic radiation. More particularly, the flash 255 may be used to produce a brief bright light which may facilitate picture-taking in low light conditions. That is, the flash 255 may emit light while an image is captured using the camera 253. In the embodiment illustrated, the flash 255 is located to emit light at the rear face 108 of the electronic device 201. That is, the flash is a rear-facing flash in the illustrated embodiment. The electronic device 201 may include a front-facing flash instead of or in addition to the rear facing flash to emit light at the front face 106 of the electronic device 201.

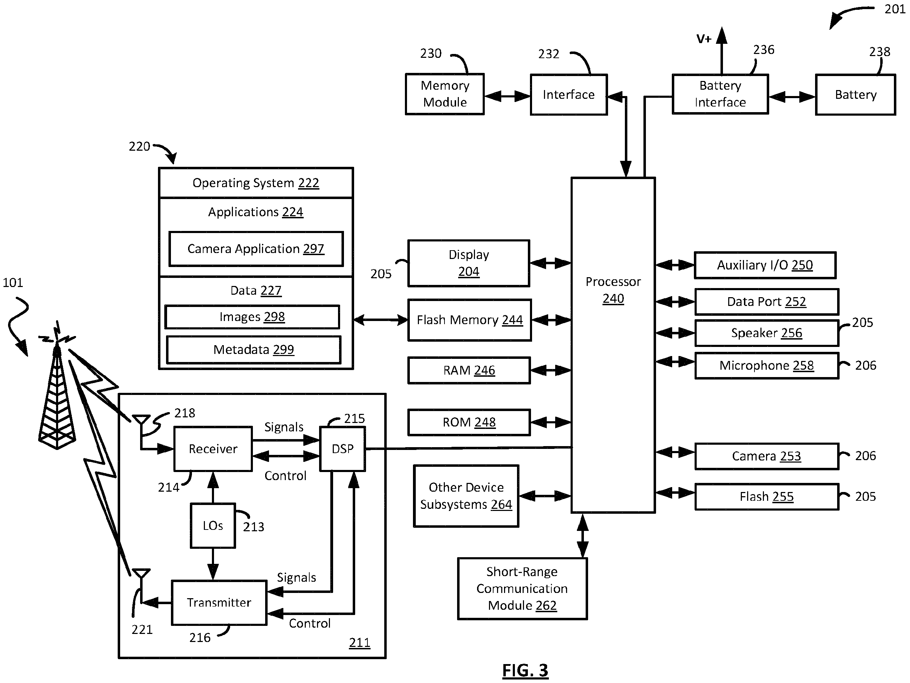

Referring now to FIG. 3, a block diagram of an example electronic device 201 is illustrated. The electronic device 201 of FIG. 3 may include a housing which houses components of the electronic device 201. Internal components of the electronic device 201 may be constructed on a printed circuit board (PCB). The electronic device 201 includes a controller including at least one processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, one or more cameras 253, and/or a touch-sensitive overlay associated with a touchscreen display), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as a display 204 (which may be a liquid crystal display (LCD)), a flash 255, one or more speakers 256, or other output interfaces), a short range communication module 262, and other device subsystems generally designated as 264. Some of the subsystems shown in FIG. 3 perform communication-related functions, whereas other subsystems may provide "resident" or on-device functions.

The electronic device 201 may include a touchscreen display in some example embodiments. The touchscreen display may be constructed using a touch-sensitive input surface connected to an electronic controller. The touch-sensitive input surface overlays the display 204 and may be referred to as a touch-sensitive overlay. The touch-sensitive overlay and the electronic controller provide a touch-sensitive input interface 206 and the processor 240 interacts with the touch-sensitive overlay via the electronic controller. That is, the touchscreen display acts as both an input interface 206 and an output interface 205.

The communication subsystem 211 includes a receiver 214, a transmitter 216, and associated components, such as one or more antenna elements 218 and 221, local oscillators (LOs) 213, and a processing module such as a digital signal processor (DSP) 215. The antenna elements 218 and 221 may be embedded or internal to the electronic device 201 and a single antenna may be shared by both receiver 214 and transmitter 216, as is known in the art. The particular design of the wireless communication subsystem 211 depends on the wireless network 101 in which the electronic device 201 is intended to operate.

The electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 218 through the wireless network 101 are input to the receiver 214, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 215. In a similar manner, signals to be transmitted are processed, including modulation and encoding, for example, by the DSP 215. These DSP-processed signals are input to the transmitter 216 for digital-to-analog (D/A) conversion, frequency up conversion, filtering, amplification, and transmission to the wireless network 101 via the antenna 221. The DSP 215 not only processes communication signals, but may also provide for receiver and transmitter control. For example, the gains applied to communication signals in the receiver 214 and the transmitter 216 may be adaptively controlled through automatic gain control algorithms implemented in the DSP 215.

In some example embodiments, the auxiliary input/output (I/O) subsystems 250 may include an external communication link or interface, for example, an Ethernet connection. The electronic device 201 may include other wireless communication interfaces for communicating with other types of wireless networks; for example, a wireless network such as an orthogonal frequency division multiplexed (OFDM) network.

In some example embodiments, the electronic device 201 also includes a removable memory module 230 (typically including flash memory) and a memory module interface 232. Network access may be associated with a subscriber or user of the electronic device 201 via the memory module 230, which may be a Subscriber Identity Module (SIM) card for use in a GSM network or other type of memory module for use in the relevant wireless network type. The memory module 230 may be inserted in or connected to the memory module interface 232 of the electronic device 201.

The electronic device 201 may store data 227 in an erasable persistent memory, which in one example embodiment is the flash memory 244. In various example embodiments, the data 227 may include service data having information required by the electronic device 201 to establish and maintain communication with the wireless network 101. The data 227 may also include user application data such as email messages, address book and contact information, calendar and schedule information, notepad documents, images 298, and other commonly stored user information stored on the electronic device 201 by its user, and other data. The data 227 may, in at least some embodiments, include metadata 299 which may store information about the images 298. While the metadata 299 is illustrated separately from the images 298, in some embodiments, the metadata 299 and the images 298 may be stored together. That is, a single file may include both an image 298 and also metadata 299 regarding that image. For example, in at least some embodiments, the image may be formatted and stored as a JPEG image.

The data 227 stored in the persistent memory (e.g. flash memory 244) of the electronic device 201 may be organized, at least partially, into a number of databases or data stores each containing data items of the same data type or associated with the same application. For example, email messages, contact records, and task items may be stored in individual databases within the electronic device 201 memory.

The data port 252 may be used for synchronization with a user's host computer system. The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In some example embodiments, the electronic device 201 is provided with a service routing application programming interface (API) which provides an application with the ability to route traffic through a serial data (i.e., USB) or Bluetooth^{®} (Bluetooth^{®} is a registered trademark of Bluetooth SIG, Inc.) connection to the host computer system using standard connectivity protocols. When a user connects their electronic device 201 to the host computer system via a USB cable or Bluetooth^{®} connection, traffic that was destined for the wireless network 101 is automatically routed to the electronic device 201 using the USB cable or Bluetooth^{®} connection. Similarly, any traffic destined for the wireless network 101 is automatically sent over the USB cable Bluetooth^{®} connection to the host computer for processing.

The electronic device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The short range communication module 262 provides for communication between the electronic device 201 and different systems or devices, which need not necessarily be similar devices. For example, the short range communication module 262 may include an infrared device and associated circuits and components, or a wireless bus protocol compliant communication mechanism such as a Bluetooth^{®} communication module to provide for communication with similarly-enabled systems and devices.

The electronic device 201 includes a camera 253. The camera 253 is capable of capturing camera data such as images in the form of still photographs and/or motion video. The camera data may be captured in the form of an electronic signal which is produced by an image sensor. The camera 253 is, in at least some embodiments, a rear facing camera (as shown in FIG. 2). However, in other embodiments, the camera 253 may be a front facing camera. In further embodiments, the electronic device 201 may include both a front facing camera and a rear facing camera.

In the embodiment illustrated, the camera 253 is illustrated as being coupled directly with a main processor 240 which controls the camera. In at least some embodiments, the camera 253 may include a dedicated image signal processor which may provide at least some camera-related functions. For example, in at least some embodiments, the image signal processor of the camera 253 may be configured to provide auto-focusing functions. Functions or features which are described below with reference to the camera application 297 may, in at least some embodiments, be provided, in whole or in part, by the image signal processor.

The electronic device 201 also includes a flash 255. As noted above, the flash 255 is used to illuminate a subject while the camera 253 captures an image of the subject. The flash 255 may, for example, be used in low light conditions. In the example embodiment illustrated, the flash 255 is coupled with the main processor 240 of the electronic device 201. However, in other embodiments, the flash 255 may be coupled to an image signal processor (not shown) of the camera 253 which may be used to trigger the flash. The image signal processor may, in at least some embodiments, control the flash 255. In at least some such embodiments, applications associated with the main processor 240 may be permitted to trigger the flash 255 by providing an instruction to the image signal processor to instruct the image signal processor to trigger the flash 255.

A predetermined set of applications that control basic device operations, including data and possibly voice communication applications may be installed on the electronic device 201 during or after manufacture. Additional applications and/or upgrades to an operating system 222 or software applications 224 may also be loaded onto the electronic device 201 through the wireless network 101, the auxiliary I/O subsystem 250, the data port 252, the short range communication module 262, or other suitable device subsystems 264. The downloaded programs or code modules may be permanently installed; for example, written into the program memory (e.g. the flash memory 244), or written into and executed from the RAM 246 for execution by the processor 240 at runtime.

In some example embodiments, the electronic device 201 may provide two principal modes of communication: a data communication mode and a voice communication mode. In the data communication mode, a received data signal such as a text message, an email message, or webpage download will be processed by the communication subsystem 211 and input to the processor 240 for further processing. For example, a downloaded webpage may be further processed by a web browser or an email message may be processed by the email messaging application and output to the display 204. A user of the electronic device 201 may also compose data items, such as email messages; for example, using an input interface 206 in conjunction with the display 204. These composed items may be transmitted through the communication subsystem 211 over the wireless network 101.

In the voice communication mode, the electronic device 201 provides telephony functions and may operate as a typical cellular phone. The overall operation is similar to the data communication mode, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input devices). Alternative voice or audio I/O subsystems, such as a voice message recording subsystem, may also be implemented on the electronic device 201. Although voice or audio signal output may be accomplished primarily through the speaker 256, the display 204 may also be used to provide an indication of the identity of a calling party, duration of a voice call, or other voice call related information.

The processor 240 operates under stored program control and executes software modules 220, such as applications 224, stored in memory such as persistent memory; for example, in the flash memory 244. As illustrated in FIG. 3, the software modules 220 may include operating system software 222 and one or more additional applications 224 or modules such as, for example, a camera application 297. The processor 240 may also operate to process data 227 stored in memory associated with the electronic device 201.

In the example embodiment of FIG. 3, the camera application 297 is illustrated as being implemented as a stand-alone application 224. However, in other example embodiments, the camera application 297 could be provided by another application or module such as, for example, the operating system software 222. Furthermore, while the camera application 297 is illustrated with a single block, the functions or features provided by the camera application 297 could, in at least some embodiments, be divided up and implemented by a plurality of applications and/or modules.

The camera application 297 may, for example, be configured to provide a viewfinder on the display 204 by displaying, in real time or near real time, an image defined in the electronic signals received from the camera 253. The camera application 297 may also be configured to capture an image or video by storing an image or video defined by the electronic signals received from the camera 253. For example, the camera application 297 may be configured to store an image 298 or video to memory of the electronic device 201.

The camera application 297 may also be configured to control options or preferences associated with the camera 253. For example, the camera application 297 may be configured to control a camera lens aperture and/or a shutter speed. The control of such features may, in at least some embodiments, be automatically performed by the camera software based on output received from a light exposure meter.

In at least some embodiments, the camera application 297 may be configured to focus the camera 253 on a subject. For example, the camera application 297 may be configured to control an actuator of the camera 253 to move a lens (which is comprised of one or more lens elements) in the camera 253 relative to an image sensor in the camera 253. For example, when capturing images of subjects which are very close to the camera 253 (e.g. subject at macro position), the camera application 297 may control the actuator to cause the actuator to move the lens away from the image sensor.

In at least some embodiments, the camera application 297 may provide for auto-focusing capabilities. For example, the camera application 297 may analyze received electronic signals to determine whether the images captured by the camera are in focus. That is, the camera application 297 may determine whether the images defined by electronic signals received from the camera 253 are focused properly on the subject of such images. The camera application 297 may, for example, make this determination based on the sharpness of such images. If the camera application 297 determines that the images are not in focus, then the camera application 297 may cause the processor to adjust the actuator which controls the lens to focus the image.

In at least some embodiments, the camera application 297 may be configured to control a flash associated with the camera 253 and/or to control a zoom associated with the camera 253. In at least some embodiments, the camera application 297 is configured to provide digital zoom features. The camera application 297 may provide digital zoom features by cropping an image down to a centered area with the same aspect ratio as the original. In at least some embodiments, the camera application 297 may interpolate within the cropped image to bring the cropped image back up to the pixel dimensions of the original. The camera application 297 may, in at least some embodiments, provide image stabilization for the camera. Image stabilization may reduce blurring associated with movement of the camera 253.

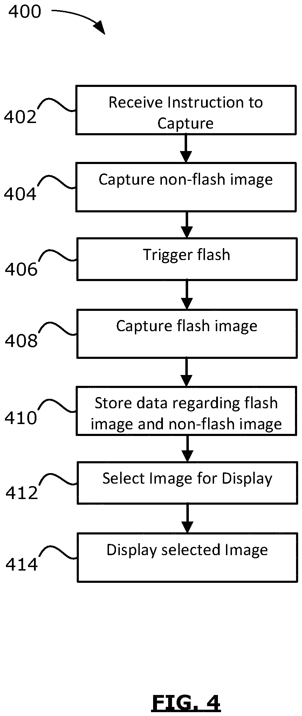

As will be described in greater detail below with reference to FIGs. 4 to 8, in at least some example embodiments, the camera application 297 is configured to capture multiple images with different camera settings in response to a single command to capture an image. For example, in at least some embodiments, a signal instructing the electronic device to capture an image may be received via an input interface 206 of the electronic device 201, such as a touchscreen display 204. In response to receiving the signal instructing the electronic device to capture the image, the electronic device may capture a non-flash image and also capture a flash image. That is, the electronic device 201 may capture a first image without the flash 255 and may soon thereafter trigger the flash and capture a second image utilizing the light from the flash.

Accordingly, in some embodiments, in response to a single input, an image is captured by the electronic device 201 both with a flash 255 and without a flash 255. In at least some embodiments, metadata 299 may be stored which designates one of the images as a primary image and one of the images a secondary image. For example, in at least some embodiments, an image which was captured according to a user-specified setting may be designated as the primary image and an image which was captured contrary to a user-specified setting may be designated as the secondary image. For example, in some embodiments, a user may instruct the electronic device 201 to capture an image using a flash 255 and, in response, the electronic device 201 may capture an image both with the flash 255 and without the flash 255. In some embodiments, when the user instructs the electronic device 201 to capture an image using a flash 255, the image which was captured using the flash 255 will be designated as the primary image and the image captured without the flash will be designated as the secondary image.

Similarly, in some embodiments, a user may instruct the electronic device 201 to capture an image without the flash. In some embodiments, when the user instructs the electronic device 201 to capture an image without the flash 255, the electronic device 201 captures an image both with and without the flash 255. In some embodiments, when the user instructs the electronic device 201 to capture an image without the flash 255, the image which was captured without the flash will be designated as the primary image and the image which was captured with the flash will be designated as the secondary image.

In at least some embodiments, the metadata 299 designating an image as either a primary image or a secondary image may be used when displaying images. For example, in at least some embodiments, the camera application 297 may provide a slideshow mode in which a slideshow of images may be displayed on a display of the electronic device. The slideshow may exclude images designated as secondary images until a command to toggle to a secondary image is received via an input interface 206 while an image designated as a primary image is displayed. In response to receiving such an input, the camera application 297 may cause the secondary image which is associated with the displayed primary image (i.e. the secondary image which was captured at approximately the same time as the displayed primary image) to be displayed. That is, in the slideshow mode, the electronic device 201 may only display primary images unless a specific instruction is received instructing the electronic device to display a secondary image.

Further functions and features of the camera application 297 will be described in greater detail below with reference to FIGs. 4 to 8.

The electronic device 201 may include a range of additional software applications 224, including, for example, a notepad application, voice communication (i.e. telephony) application, mapping application, a media player application, or any combination thereof. Each of the software applications 224 may include layout information defining the placement of particular fields and graphic elements (e.g. text fields, input fields, icons, etc.) in the user interface (i.e. the display 204) according to the application.

The software modules 220 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

### Image Capture

Referring now to FIG. 4, an example method 400 for capturing images is illustrated in flowchart form. The method 400 includes features which may be provided by an electronic device 201, such as the electronic devices 201 of FIGs. 1 to 3.

More particularly, one or more applications or modules associated with an electronic device 201, such as the camera application 297 (FIG. 3), may contain processor readable instructions for causing a processor associated with the electronic device 201 to perform one or more operations of the method 400 of FIG. 4. That is, in at least some example embodiments, the electronic device 201 may be configured to perform the method 400 of FIG. 4. For example, the method 400 may be implemented by a processor 240 (FIG. 3) of an electronic device 201 (FIG. 3).

In at least some embodiments, one or more of the functions or features of the method 400 of FIG. 4 may be performed, in whole or in part, by another system, software application, module, component or device apart from those specifically listed above.

At 402, a signal is received instructing the electronic device 201 to capture an image. The signal may be received, for example, via an input interface 206 of the electronic device 201 such as a touchscreen display 204. The signal is, in at least some embodiments, generated by the touchscreen display 204 when a suitable touch is received from a user of the electronic device 201.

The signal may be an instruction to capture an image using a user-defined setting. For example, the instruction is, in at least some embodiments, an instruction to capture a flash image. That is, in at least some embodiments, the instruction may command the electronic device 201 to capture an image using the flash 255. Similarly, the instruction is, in at least some embodiments, an instruction to capture a non-flash image. That is, in at least some embodiments, the instruction may be an instruction to capture an image without using the flash 255. In at least some embodiments, the instruction may be an instruction to capture an image using an auto-flash setting. That is, the instruction may be an instruction to allow the electronic device 201 to determine whether the flash 255 should be used.

In at least some embodiments, in response to receiving the signal instructing the electronic device 201 to capture the image, the electronic device 201 at 404 captures a non-flash image using the camera 253. That is, the electronic device 201, at 404, captures an image without using the flash 255. More particularly, the electronic device 201 captures an image without emitting light from the flash 255 to illuminate the subject of the image. When the image is captured at 404, the flash 255 does not light the subject. The image captured at 404 may be referred to as a non-flash image since it is captured without the use of the flash 255.

At 404, the electronic device 201 may store the captured non-flash image in memory of the electronic device 201. That is, at 404 an image may be stored in the memory based on camera data generated by the camera 253. In at least some embodiments, at 404, the image may be stored in persistent memory, such as in flash memory.

In at least some embodiments, the electronic device 201 may be configured to provide zero-shutter-lag image capture. More particularly, the electronic device 201 may be configured to store an image in a buffer before and/or very near to the time when an instruction to capture an image is received. For example, prior to 402, the electronic device 201 may store an image obtained from the camera 253 in a buffer of the electronic device 201. Zero-shutter-lag image capture allows the electronic device 201 to capture an image at a time which is very near to the time when an instruction is received to capture an image. That is, zero-shutter-lag image capture allows the electronic device 201 to store an image which was obtained at approximately the same time as when a user instructed the electronic device 201 to obtain the image.

In at least some such embodiments, at 404, the electronic device 201 may capture the non-flash image by retrieving the image from the buffer (which may, for example, be the most recent image in the buffer), and by storing the retrieved image in a persistent memory. That is, the electronic device 201 may store the non-flash image in a location which is more permanent than the buffer.

Accordingly, in at least some embodiments, at 404, a non-flash image is captured. The non-flash image may, in some embodiments, be captured even when the instruction received at 402 was an instruction to capture a flash image. That is, the electronic device 201 may, at 404, capture an image using an image setting which is contrary to the image setting which a user specified for the image capture.

In at least some embodiments, in response to receiving the signal instructing the electronic device 201 to capture the image (at 402) the electronic device 201 may trigger the flash 255 at 406. That is, the electronic device 201 may cause the flash 255 to emit light to illuminate a subject.

The electronic device 201 may then, at 408, capture a flash image using the camera 253. That is, the electronic device 201 may capture an image at the same time or shortly after the flash 255 was triggered so that the light emitted by the flash 255 affects the captured image.

At 408, the electronic device 201 may store the captured flash image in memory of the electronic device 201. That is, at 408 an image may be stored in the memory based on camera data generated by the camera 253. In at least some embodiments, at 408, the image may be stored in persistent memory, such as in flash memory.

Accordingly, in at least some embodiments, at 408, a flash image is captured. The flash image may, in some embodiments, be captured even when the instruction received at 402 was an instruction to capture an image without the flash 255. That is, the electronic device 201 may, at 408, capture an image using an image setting which is contrary to the image setting which a user specified for the image capture.

In at least some embodiments, at 410, the electronic device 201 may store data regarding the flash image and/or the non-flash image in memory of the electronic device 201. That is, the electronic device 201 may store metadata 299 regarding one or more of the images to memory of the electronic device 201.

The metadata 299 which is stored at 410 may, in at least some embodiments, specify that the non-flash image and the flash image are related. That is, the metadata 299 may establish a relationship, in memory, between the flash image and the non-flash image. More particularly, the metadata 299 may track images which were captured in response to a common input signal. When two images (e.g., a flash image and a non-flash image) are captured in response to the same input signal, the metadata 299 may relate those images. That is, in such circumstances, the metadata 299 may indicate that the images are related.

The metadata 299 may, in at least some embodiments, be stored together with the images 298. That is, an image 298 and its associated metadata 299 may be stored together, in a single file. In other embodiments, the metadata 299 may be stored apart from the images 298. For example, in some embodiments, the metadata 299 may be stored in a separate metadata database.

In at least some embodiments, at 410, the electronic device 201 may store, in memory, data designating one of the captured images as a primary image and the other of the captured images as a secondary image. That is, the electronic device 201 may store metadata 299 which designates one of either the non-flash image or the flash image as a primary image and the other of these images as a secondary image.

In at least some embodiments, these designations will depend on a camera setting of the electronic device 201. For example, in at least some embodiments, an image that is captured according to a user-specified camera setting will be designated by the electronic device 201 as a primary image and an image that is captured contrary to a user-specified camera setting will be designated by the electronic device 201 as a secondary image. For example, in some embodiments, when the signal received at 402 is an instruction to capture an image using a flash, then the electronic device 201 may designate the flash image as the primary image and may designate the non-flash image as the secondary image.

Similarly, in some embodiments, when the signal received at 402 is an instruction to capture an image without using a flash, then the electronic device 201 may designate the non-flash image as the primary image and may designate the flash image as the secondary image.

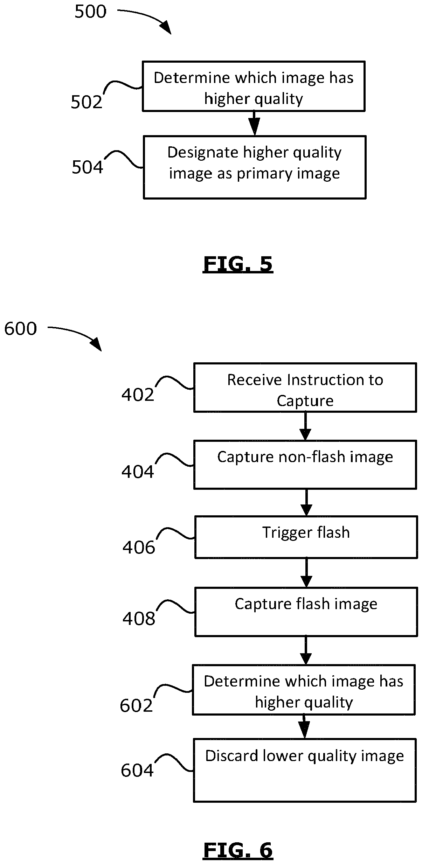

Other methods of designating an image as either a primary image or a secondary image will be discussed below with reference to FIG. 5.

At 412, the electronic device 201 may select an image for display on the display 204 based on the data designating one of the captured images as the primary image and the other of the captured images as the secondary image. That is, in at least some embodiments, the electronic device 201 may use the information regarding which image has been designated as a primary image and the information regarding which image has been designated as a secondary image in order to determine which of the two images will be displayed. In at least some embodiments, at 414, the image which was selected at 412 may be displayed on the display 204. By way of example, in some embodiments, after both a flash image and a non-flash image are captured, the electronic device 201 may display a brief preview of one of the captured images before re-entering a viewfinder mode. In at least some embodiments, the preview may display the image which was designated as the primary image.

### Designating Image as Primary Image

Referring now to FIG. 5, an example method 500 for designating an image as a primary image is illustrated in flowchart form. The method 500 includes features which may be provided by an electronic device 201, such as the electronic device 201 of FIGs. 1 to 3. The method 500 may, for example, be performed at 410 of the method of FIG. 4. That is, the method 500 may be performed when storing metadata 299 regarding the flash image and the non-flash image. In at least some embodiments, the method 500 may be performed at 410 of the method 400 of FIG. 4 when an instruction is received at 402 to capture an image using an auto-flash function. That is, when an instruction is received requesting the electronic device 201 to capture an image and to decide whether a flash should be used, the electronic device may perform the method 400 of FIG. 4 in order to capture both a flash image and a non-flash image and may use the method 500 of FIG. 5 to determine which of those two images should be designated as the primary image. In other embodiments, the method 500 of FIG. 5 may be performed outside of operation 410 of the method 400 of FIG. 4. For example, in some embodiments, the method 500 may be performed after operation 408 of the method 400 of FIG. 4 and before operation 410 of the method 400 of FIG. 4. In other embodiments, the method 500 of FIG. 5 may be performed after operation 410 of the method 400 of FIG. 4 and before operation 412 of FIG. 4.

One or more applications or modules associated with an electronic device 201, such as the camera application 297 (FIG. 3), may contain processor readable instructions for causing a processor associated with the electronic device 201 to perform one or more operations of the method 500 of FIG. 5. That is, in at least some example embodiments, the electronic device 201 may be configured to perform the method 500 of FIG. 5. For example, the method 500 may be implemented by a processor 240 (FIG. 3) of an electronic device 201 (FIG. 3).

In at least some embodiments, one or more of the functions or features of the method 500 of FIG. 5 may be performed, in whole or in part, by another system, software application, module, component or device apart from those specifically listed above.

At 502, the electronic device 201 determines which of the captured images has a higher relative image quality. That is, the electronic device 201 analyzes the flash image and its corresponding non-flash image to determine which of the two images has a superior image quality.

At 504, the electronic device designates the image having the higher relative image quality as the primary image and the other image (i.e. the image having a lower relative image quality) as the secondary image.

While FIG. 5 illustrates an embodiment in which the electronic device 201 determines which captured image has a higher relative image quality, in other embodiments, the electronic device 201 may consult a user in order to select the image having a higher image quality. For example, in some embodiments, the electronic device 201 may prompt a user to select the image having the higher image quality.

### Removing Lower Quality Image

Referring now to FIG. 6, an example method 600 for designating an image as a primary image is illustrated in flowchart form. The method 600 includes features which may be provided by an electronic device 201, such as the electronic device 201 of FIGs. 1 to 3. In some embodiments, the method 600 may be performed when an auto-flash feature is on. That is, the method 600 may be performed when a user has instructed the electronic device 201 to determine whether a flash 255 should be used when capturing images.

One or more applications or modules associated with an electronic device 201, such as the camera application 297 (FIG. 3), may contain processor readable instructions for causing a processor associated with the electronic device 201 to perform one or more operations of the method 600 of FIG. 6. That is, in at least some example embodiments, the electronic device 201 may be configured to perform the method 600 of FIG. 6. For example, the method 600 may be implemented by a processor 240 (FIG. 3) of an electronic device 201 (FIG. 3).

In at least some embodiments, one or more of the functions or features of the method 600 of FIG. 6 may be performed, in whole or in part, by another system, software application, module, component or device apart from those specifically listed above.

The method 600 includes features 402, 404, 406 and 408 which are described in greater detail above with reference to FIG. 4.

After the flash image and the non-flash image are captured, at 602, the electronic device 201 may determine which of the images has a higher image quality. That is, the electronic device 201 analyzes the flash image and its corresponding non-flash image to determine which of the two images has a superior image quality.

At 604, the electronic device 201 may discard the image having the lower image quality. In at least some embodiments, at 604, the electronic device may delete the lower quality image from memory of the electronic device 201 so that only the higher quality image is stored.

While FIG. 6 illustrates an embodiment in which the electronic device 201 determines whether an image should be discarded, in other embodiments, the electronic device 201 may discard an image if a user instruction to delete the image is received.

### Image Display

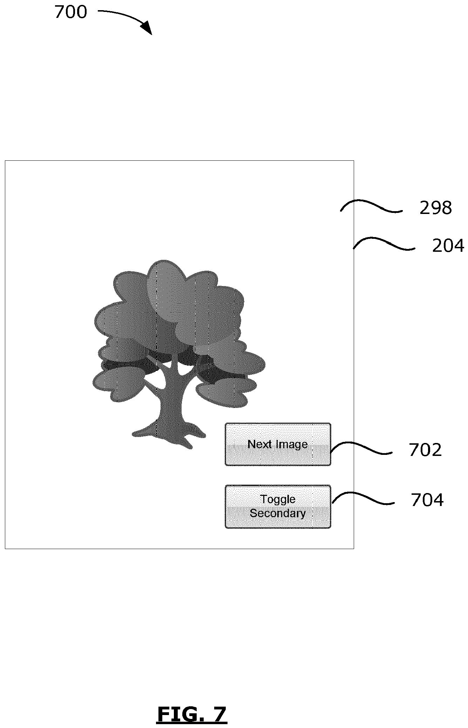

Referring now to FIG. 7, an example image display 700 is illustrated. The image display 204 may be a display screen which is generated by the electronic device 201 and which is displayed on the display 204 of the electronic device 201. The image display 700 may be displayed on the display 204 in response to a user instruction received via an input interface instructing the electronic device 201 to display an image.

The image display 700 displays an image 298. In the example embodiment of FIG. 7, the image display 700 displays an image 298 which was designated as a primary image. However, other image displays 700 may display images 298 which are designated as secondary images.

While the primary image is displayed in the image display 700, a selectable option 702 to navigate to a next image may be provided by the electronic device 201. The selectable option 702 to navigate to a next image may be provided by an input interface 206 of the electronic device 201. In the illustrated embodiment, the selectable option 702 to navigate to a next image is provided by a touchscreen display 204 of the electronic device 201. That is, in the illustrated embodiment, the selectable option 702 takes the form of an interface element on a display 204. However, in other embodiments, the selectable option 702 may be provided by another input interface, such as a physical key or button of the electronic device 201. In some embodiments, the selectable option 702 may be provided through the use of a gesture. The gesture may, in some embodiments, be a tapping gesture. In some embodiments, the gesture may be received at a portion of a touchscreen which does not display a button. For example, in some embodiments, a tapping gesture applied to the image itself will cause the electronic device to interpret the gesture as a command to navigate to the next image.

In at least some embodiments, the electronic device 201 is configured so that selection of the selectable option 702 to navigate to a next image causes the electronic device 201 to open another image designated as a primary image. That is, selection of the selectable option 702 to navigate to a next image causes the electronic device 201 to display another primary image on the display 204.

While a primary image is displayed in the image display 700, a selectable option 704 to toggle a secondary image may be provided by the electronic device 201. The selectable option 704 to toggle to a secondary image may be provided by an input interface 206 of the electronic device 201. In the illustrated embodiment, the selectable option 704 to toggle to a secondary image is provided by a touchscreen display 204 of the electronic device 201. That is, in the illustrated embodiment, the selectable option 704 takes the form of an interface element on a display 204. However, in other embodiments, the selectable option 704 may be provided by another input interface, such as a physical key or button of the electronic device 201. In some embodiments, the selectable option 704 may be provided through the use of a gesture. The gesture may, in some embodiments, be a tapping gesture. In some embodiments, the gesture may be received at a portion of a touchscreen which does not display a button. For example, in some embodiments, a tapping gesture applied to the image itself will cause the electronic device to interpret the gesture as a command to toggle between the primary image and the secondary image. Similarly, in some embodiments, when a user touches the image (e.g. hovers on the image), the electronic device may toggle to the secondary image until the user is no longer touching the image, at which point the electronic device may toggle back to the primary image.

In at least some embodiments, the electronic device 201 is configured so that selection of the selectable option 704 to toggle to a secondary image causes the electronic device 201 to open an image which is designated as a secondary image and which is associated with the displayed primary image. That is, selection of the selectable option 704 to toggle the secondary image causes the electronic device 201 to display the secondary image associated with the displayed primary image on the display 204. The electronic device 201 may select the secondary image associated with the displayed primary image by consulting the metadata 299.

While the image display 700 of FIG. 7 illustrates an image display in which a single image is displayed at one time, in other embodiments, the electronic device 201 may be configured to display multiple images at the same time. For example, in some embodiments the image display 700 may be a split-screen display in which a portion of the image display 700 (which may be referred to as a first pane) displays a primary image and another portion of the image display 700 (which may be referred to as a second pane) displays the secondary image associated with the displayed primary image. In at least some embodiments, one or more functions or features may be synchronized across both panes. That is, when a feature is applied to an image in the first pane, the electronic device 201 may also apply the same feature to the image in the second pane. For example, when a user pans and/or zooms an image within one of the panes, the image within the other pane is also panned and/or zoomed by a corresponding amount. Accordingly, in at least some embodiments, the panes are synchronized so that they display corresponding portions of their respective images.

### Selecting Image For Display

Accordingly, in at least some embodiments, the electronic device 201 may be configured to allow a user to toggle to a secondary image associated with a primary image and/or to navigate to a next primary image.

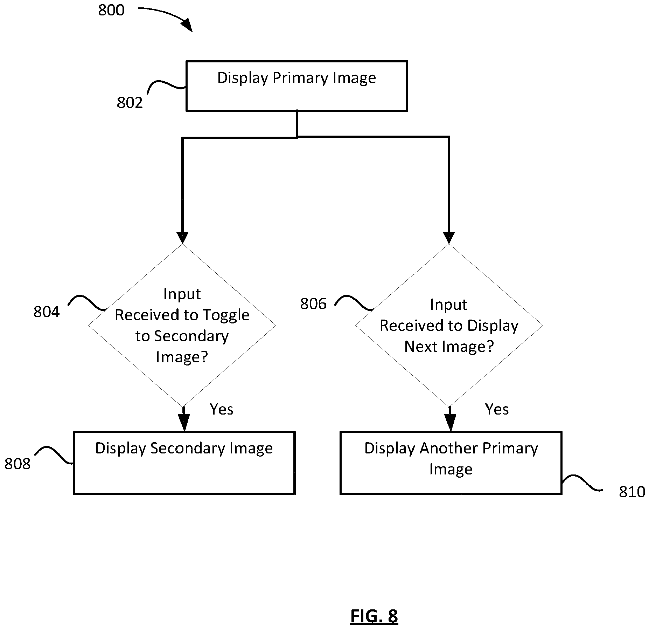

Referring now to FIG. 8, a method 800 for selecting an image for display is illustrated in flowchart form. The method 800 includes features which may be provided by an electronic device 201, such as the electronic device 201 of FIGs. 1 to 3. The method 800 may, for example, be performed at 414 of the method 400 of FIG. 4.

One or more applications or modules associated with an electronic device 201, such as the camera application 297 (FIG. 3), may contain processor readable instructions for causing a processor associated with the electronic device 201 to perform one or more operations of the method 800 of FIG. 8. That is, in at least some example embodiments, the electronic device 201 may be configured to perform the method 800 of FIG. 8. For example, the method 800 may be implemented by a processor 240 (FIG. 3) of an electronic device 201 (FIG. 3).

In at least some embodiments, one or more of the functions or features of the method 800 of FIG. 8 may be performed, in whole or in part, by another system, software application, module, component or device apart from those specifically listed above.

At 802, an image designated as a primary image may be displayed on a display 204 of the electronic device 201. The image may, for example, be displayed in the manner described above with reference to the image display 700 of FIG. 7. The image may, in at least some embodiments, be displayed in response to an instruction received via an input interface 206, instructing the electronic device 201 to display the image.

At 804, the electronic device 201 determines whether input has been received to toggle to a secondary image. Such input may be received, for example, via a selectable option 704 (FIG. 7) to toggle to a secondary image.

Similarly, at 806, the electronic device 201 determines whether input has been received to display a next image. Such input may be received, for example, via a selectable option 702 (FIG. 7) to display a next image.

When a signal is received instructing the electronic device to toggle to the secondary image associated with the displayed primary image (i.e. if the result of operation 804 is true), a secondary image associated with the primary image is displayed at 808. The secondary image which is associated with the displayed primary image may be identified using the metadata 299.

When a signal is received instructing the electronic device to display a next image (i.e. if the result of operation 806 is true), the electronic device 201 may, at 810, display another image that is designated as a primary image and that is stored in memory associated with the electronic device 201.

While the method 800 of FIG. 8 describes an embodiment in which an instruction may be received via an input interface 206 which causes the electronic device 201 to navigate to a next image, in other embodiments, the electronic device may navigate to a next image when other criteria is met. For example, in at least some embodiments, the electronic device 201 may be configured to display a slideshow of images on a display of the electronic device 201. During the slideshow, a primary image is displayed for a predetermined period of time. After that time has expired, the electronic device may display another primary image. In at least some embodiments, the electronic device may allow the slideshow to be interrupted. For example, the electronic device 201 may allow a user to input a command to toggle to a secondary image while a primary image is displayed. In response to such a command, the secondary image associated with the displayed primary image is displayed. In at least some embodiments, the slideshow of images excludes images designated as secondary images until a command to toggle to a secondary image is received while an image designated as a primary image is displayed. That is, the slideshow may be a slideshow of primary images, but when a primary image is displayed, a user may be permitted to toggle to the secondary image associated with the displayed primary image.

While the present application is primarily described in terms of methods, a person of ordinary skill in the art will understand that the present application is also directed to various apparatus such as a handheld electronic device and a server. The handheld electronic device and the server includes components for performing at least some of the example aspects and features of the described methods, be it by way of hardware components (such as the memory and/or the processor), software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile/Video Disc (DVD) or Blu-ray™ Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A processor-implemented method for capturing an image at an electronic device (201), the method comprising:
receiving at the processor (240) a signal instructing the electronic device to capture an image; and
in response to receiving the signal instructing the electronic device (201) to capture the image:
capturing a non-flash image;
triggering a flash (255); and
capturing a flash image.

2. The method of claim 1, further comprising:
storing, in memory, data specifying that the non-flash image and the flash image are related.

3. The method of claim 1 or claim 2, further comprising:
storing, in memory, data designating one of the captured images as a primary image and the other of the captured images as a secondary image.

4. The method of claim 3, wherein storing data designating one of the captured images as a primary image and the other of the captured images as a secondary image comprises:
when the received signal is an instruction to capture an image using a flash:
designating the flash image as the primary image and the non-flash image as the secondary image.

5. The method of claim 3, wherein storing data designating one of the captured images as a primary image and the other of the captured images as a secondary image comprises:
when the received signal is an instruction to capture an image without a flash:
designating the non-flash image as the primary image and the flash image as the secondary image.

6. The method of claim 3, wherein storing data designating one of the captured images as a primary image and the other of the captured images as a secondary image comprises:
determining which of the images has a higher image quality; and
designating the image having the higher image quality as the primary image and the other image as the secondary image.

7. The method of any of claims 3 to 6, further comprising:
selecting an image for display based on the data designating one of the captured images as the primary image and the other of the captured images as the secondary image; and
displaying the selected image.

8. The method of any of claims 3 to 7, further comprising:
displaying the image designated as the primary image; and
when a signal is received instructing the electronic device to toggle to the secondary image associated with the displayed primary image:
displaying the image designated as the secondary image.

9. The method of claim 8, further comprising:
when a signal is received instructing the electronic device to display a next image:
displaying another image that is designated as a primary image and that is stored in memory associated with the electronic device.

10. The method of any preceding claim, further comprising:
determining which of the images has a higher image quality; and
discarding the image having a lower image quality.

11. The method of any preceding claim, further comprising:
displaying a slideshow of images on a display of the electronic device, the slideshow excluding images designated as secondary images until a command to toggle to a secondary image is received while an image designated as a primary image is displayed.

12. The method of any preceding claim, wherein the electronic device is configured to provide zero-shutter-lag image capture by storing an image in a buffer before the signal instructing the electronic device to capture an image is received, and wherein capturing a non-flash image comprises retrieving an image from the buffer and storing the retrieved image in a persistent memory.

13. An electronic device (201) comprising:
a camera (253);
a flash (255);
a memory; and
a processor (240) coupled with the camera, flash and memory, the processor being configured to:
perform the method of any one of claims 1 to 12.

14. A computer readable storage medium comprising computer-executable instructions which, when executed, cause a processor to perform the method of any one of claims 1 to 12.
